# EUROPÄISCHE PATENTSCHRIFT

(11) **EP 1 549 474 B1**
(45) Veröffentlichungstag und Bekanntmachung des Hinweises auf die Patenterteilung: **05.11.2008**
(21) Anmeldenummer: 03757679.0
(22) Anmeldetag: 17.09.2003
(51) Int. Cl.: B29C 33/00, B29C 33/30, H01F 41/12

(54) **GIESSFORM FÜR ZYLINDRISCHE GIESSHARZSPULEN**
CASTING MOULD FOR CYLINDRICAL CAST RESIN COILS
MOULE POUR BOBINES CYLINDRIQUES EN RESINE MOULEE

(30) Priorität: 30.09.2002 DE 10246539; 15.10.2002 DE 10248782
(43) Veröffentlichungstag der Anmeldung: 06.07.2005
(73) Patentinhaber: SIEMENS AKTIENGESELLSCHAFT, 80333 München (DE)
(72) Erfinder: SORG, Fritz, 70180 Stuttgart (DE)
(86) Internationale Anmeldenummer: PCT/DE2003/003139
(87) Internationale Veröffentlichungsnummer: WO 2004/030887

(56) Entgegenhaltungen:
- EP-A- 0 491 070
- DE-A- 4 426 138
- PATENT ABSTRACTS OF JAPAN vol. 1998, no. 02, 30. Januar 1998 (1998-01-30) -& JP 09 260158 A (HITACHI LTD), 3. Oktober 1997 (1997-10-03)

## Beschreibung

Die Erfindung betrifft eine Gießform für zylindrische Gießharzspulen, die sich entlang einer Achse erstreckt, mit einem äußeren, mit einer rohrförmig gebogenen Gießformmantelwand ausgebildeten Gießformmantel, der einen zylindrischen Gießraum umgibt und mit einem Einfüllspalt, über den der Gießraum mit Gießharz befüllbar ist, wobei der Gießformmantel mit einer lösbaren Verbindung in axialer Richtung auftrennbar ist.

Eine solche Gießform ist aus der deutschen Patentschrift DE 44 26 138 C2 bekannt. Bei der bekannten Gießform dient die lösbare Verbindung dazu, eine schon in der Gießform befindliche, noch mit Gießharz einzugießende Spule im Bereich ihrer Spulenanschlüsse vor einem Eingießen kontrollieren zu können. Dazu ist die Gießformmantelwand beweglich und bei gelöster Verbindung aufklappbar, so dass der Gießraum dort zugänglich ist. Der Gießformmantel der bekannten Gießform weist ein Gießharzeinfüllstutzenteil auf, das mit der Gießformmantelwand gebildet ist, in dem die Gießformmantelwand an ihren in axialer Richtung liegenden Kanten jeweils über ihre gesamte axiale Länge winklig nach außen abgebogen ist, so dass zwei jeweils nach außen weisende Einfüllstutzenwände gebildet sind. Zum Eingießen einer Spule mit Gießharz wird die schon rohrförmig vorgebogene Gießformmantelwand um die Spule herumgelegt, so dass der Gießharzeinfüllstutzenteil gebildet ist, also sich die beiden Einfüllstutzenwände unter Belassung des Einfüllspalts gegenüberstehen. Der Außenumfang des Gießraums und damit der Außenumfang der Gießharzspule ist dabei durch die Länge der Gießformmantelwand festgelegt. Insoweit sind für Spulen mit unterschiedlichen Außendurchmessern auch verschiedene Gießformen erforderlich, bei denen die Gießformmantelwände unterschiedliche Längen aufweisen.

Aufgabe der Erfindung ist es, eine Gießform der eingangs genannten Art anzugeben, die ein Gießen von Spulen mit verschiedenem Außenumfang mit vergleichsweise geringem Aufwand erlaubt.

Die Aufgabe wird bei einer Gießform der eingangs genannten Art erfindungsgemäß dadurch gelöst, dass ein Gießformmantelverlängerungsteil vorgesehen ist, das derart ausgebildet ist, dass es an der aufgetrennten Verbindung zur Verlängerung des Gießformmantels in den Gießformmantel einsetzbar ist.

Mit dem Gießformmantelverlängerungsteil kann der Gießformmantel verlängert und damit ein größerer Außenumfang eingestellt werden, so dass mit der erfindungsgemäßen Gießform Gießharzspulen mit zumindest zwei unterschiedlichen Außendurchmessern hergestellt werden können. Dadurch, dass der Gießformmantelverlängerungsteil in den Gießformmantel einsetzbar ausgebildet ist, kann das Gießformmantelverlängerungsteil mit sehr geringem Aufwand in den Gießformmantel eingesetzt und wieder entfernt werden. Insoweit sind hier nicht zwei vollständige Gießformen, sondern nur die erfindungsgemäße Gießform mit dem Gießformmantelverlängerungsteil erforderlich, um Spulen mit unterschiedlichem Außendurchmesser herstellen zu können. Ein geringer Aufwand ergibt sich insbesondere daraus, dass das Gießformverlängerungsteil sehr viel geringere Abmessungen aufweist, als eine vollständige Gießform.

Die Verbindung, mit der der Gießformmantel in axialer Richtung auftrennbar ist, kann beispielsweise eine Schraubverbindung sein. Vorzugsweise ist die Verbindung eine Hakverbindung. Dadurch kann der Gießformmantel durch einfaches Aufhaken der lösbaren Verbindung aufgetrennt und durch entsprechendes Einhaken wieder geschlossen werden. Ebenso leicht kann das entsprechend für die Hakverbindung ausgebildete Gießformmantelverlängerungsteil in den Gießformmantel eingesetzt werden, in dem es entsprechend eingehakt wird.

Bevorzugt ist die Gießformmantelwand an ihren die Verbindung bildenden, in axialer Richtung gerichteten Kanten jeweils derart korrespondierend zurückgebogen, dass die Kanten miteinander verhakbar sind. Die Hakverbindung kann somit besonders einfach durch Verhaken der Kanten miteinander gebildet werden.

Nach einer bevorzugten Ausgestaltung ist das Gießformmantelverlängerungsteil dünnwandig und aus einem derartig federnden Material ausgebildet, dass es zum Einsetzen in den Gießformmantel gegen eine Federkraft gebogen ist, die bei Vereinzelung des Gießformmantelverlängerungsteils dessen Zurückfedern zu einer weitgehend flachen Platte bewirkt. Dadurch liegt das Gießformmantelverlängerungsteil, wenn es nicht in den Gießformmantel eingesetzt ist, stets als weitgehend flache Platte vor, die besonders platzsparend und einfach lagerbar ist. Dies wirkt sich besonders vorteilhaft bei einer Vielzahl von Gießformmantelverlängerungsteilen mit unterschiedlichen Abmessungen aus, die zum Umrüsten der Gießform für eine Vielzahl von verschiedenen Außendurchmessern vorgesehen sind. Die mehreren Gießformmantelverlängerungsteile können dann leicht gelagert werden, da sie jeweils weitgehend flach sind und daher wenig Platz beanspruchen.

Nach einer weiteren bevorzugten Ausgestaltung weist der Gießformmantel ein sich über die gesamte axiale Gießformlänge erstreckendes Gießformeinfüllstutzenteil mit dem Einfüllspalt auf, wobei das Gießformeinfüllstützenteil über die eine lösbare Verbindung und eine weitere lösbare Verbindung vollständig von der Gießformmantelwand abtrennbar ist. Vorteilhaft kann dadurch zusätzlich die gesamte Gießformmantelwand gegen eine andere, in ihrer die den Außenumfang des Gießraums bestimmende Länge zur einen Gießformmantelwand unterschiedliche weitere Gießformmantelwand anstelle der einen Gießformmantelwand mit dem Gießformeinfüllstutzenteil verbunden werden.

Die Erfindung betrifft auch eine Gießform für zylindrische Gießharzspulen, die sich entlang einer Achse erstreckt, mit einem äußeren Gießformmantel, der einen zylindrischen Gießbereich umgibt und durch den der Außenumfang des Gießraums weitgehend definiert ist, wobei der Gießformmantel eine rohrförmig gebogene Gießformmantelwand und einem mit der Gießformmantelwand verbundenen, sich über die gesamte axiale Länge des Gießformmantels erstreckenden Gießharzeinfüllstutzenteil aufweist, über das der Gießraum mit Gießharz befüllbar ist, wobei der Gießformmantel mit einer lösbaren Verbindung in axialer Richtung auftrennbar ist.

Eine solche Gießform ist aus der schon eingangs genannten deutschen Patentschrift DE 44 26 138 C2 bekannt.
Bei der bekannten Gießform ist - wie schon oben beschrieben - das Gießharzeinfüllstutzenteil mit der Gießformmantelwand fest verbunden.

Aufgabe der weiteren Erfindung ist es auch, eine Gießform der eingangs genannten Art anzugeben, die ein Gießen von Spulen mit verschiedenem Außenumfang mit vergleichsweise geringem Aufwand erlaubt.

Die Aufgabe wird bei einer Gießform der vorstehend genannten Art erfindungsgemäß auch dadurch gelöst, dass der Gießformmantel eine weitere lösbare Verbindung aufweist, mit der Gießformmantel in axialer Richtung auftrennbar ist und die Verbindungen derart angeordnet sind, dass der Gießharzeinfüllstutzenteil von der Gießformmantelwand abtrennbar ist, wobei die Verbindungen als Hakverbindung ausgebildet sind. Dadurch ist die Gießformmantelwand bei der erfindungsgemäßen Gießform leicht gegen eine andere Gießformmantelwand mit einer anderen Länge austauschbar, in dem die beiden Verbindungen gelöst, die eine Gießformmantelwand entfernt und an deren Stelle, die bis auf die den Außenumfang bestimmende Länge baugleiche andere Gießformmantelwand eingebaut werden. Insoweit kann die erfindungsgemäße Gießform leicht umgebaut werden, um eine Gießharzspule mit einem anderen Außendurchmesser herzustellen und es sind auch hier dafür nicht zwei vollständige Gießformen erforderlich, so dass sich auch hier ein geringerer Aufwand ergibt.

Da die Verbindungen als Hakverbindungen ausgebildet sind, ergeben sich die schon oben angesprochenen Vorteile, nämlich dass die Verbindung schnell und leicht durch einfaches Aufhaken gelöst bzw. durch entsprechendes Einhaken wieder geschlossen werden kann. ,

Bevorzugt weist das Gießharzeinfüllstutzenteil zumindest eine Teilmantelwand auf, die mit der Gießformmantelwand zur Bildung der zumindest einen Verbindung verhakbar ist, wobei die Gießformmantelwand an ihrer in axialer Richtung gerichteten, die zumindest eine Verbindung bildenden Kante zurückgebogen ist und Teilmantelwand an ihrer in axialer Richtung gerichteten die Verbindung bildenden Teilmantelwandkante entsprechend korrespondierend zu der die Verbindung bildenden Kante der Gießformmantelwand zurückgebogen ist. Dadurch sind sowohl die Gießformmantelwand als auch die Teilmantelwand besonders einfach miteinander verhakbar ausgebildet.

Vorzugsweise ist eine weitere Gießformmantelwand mit einer gegenüber der einen Gießformmantelwand unterschiedlichen, den Außenumfang des Gießraums definierenden Kantenlänge zum Austausch gegen die eine Gießformmantelwand vorgesehen. Insoweit kann durch einen einfachen Austausch der einen Gießformmantelwand gegen die weitere Gießformmantelwand mit geringem Aufwand eine andere Gießform gebildet werden, die gegenüber der mit der einen Gießformmantelwand gebildeten Gießform einen anderen Außenumfang des Gießraums aufweist.

Vorzugsweise ist die Gießformmantelwand aus einem derart federnden Material gebildet, dass die Gießformmantelwand zur Verbindung mit dem Gießharzeinfüllstutzenteil gegen eine Federkraft gebogen ist, die bei Vereinzelung der Gießformmantelwand deren Zurückfedern zu einer weitgehend flachen Platte bewirkt. Hierdurch ergeben sich die auch schon oben für das Gießformmantelverlängerungsteil angegebenen Vorteile, nämlich dass die Gießformmantelwand, sofern sie denn nicht gerade zur Bildung der Gießform verwendet wird, besonders gut lagerbar, da sie als eine weitgehend flache Platte vorliegt. Dies wirkt sich besonders vorteilhaft aus, wenn eine Vielzahl von Gießformmantelwänden mit verschiedenen den Außenumfang des Gießraums definierenden Kantenlängen zum gegenseitigen Austausch vorgesehen sind, und diese aus dem federnden Material ausgebildet sind, da sie dann alle einzeln jeweils als weitgehend flache Platte vorliegen und entsprechend leicht lagerbar sind.

Bei beiden erfindungsgemäßen Gießformen ist in einer jeweiligen Ausgestaltung das Gießformeinfüllstutzenteil vorteilhaft derart ausgebildet, dass die Breite des Einfüllspalts einstellbar ist. Dadurch ist vorteilhaft bei beiden erfindungsgemäßen Gießformen eine zusätzliche Möglichkeit gegeben, den Außenumfang des Gießraums durch Änderung der Breite des Einfüllspalts zu verändern. Insoweit kann hier durch ein geringfügiges Ändern der Breite des Einfüllspalts der Außenumfang des Gießraums besonders fein eingestellt werden.

Das Gießharzeinfüllstutzenteil weist bevorzugt zwei sich nahezu über die gesamte axiale Gießformlänge erstreckende, winklig nach außen ragende Einfüllstutzenwände auf, die über den Einfüllspalt voneinander beabstandet sind und die über zumindest ein Distanzelement verbunden sind, durch dessen Elementbreite die Breite des Einfüllspalts festgelegt ist. Insoweit kann die Breite des Einfüllspalts besonders einfach durch den Austausch des Distanzelements gegen ein anderes Distanzelement mit einer anderen feststehenden Elementbreite eingestellt werden.

Nach einer bevorzugten Ausgestaltung ist die Elementbreite des Distanzelements einstellbar. Dadurch kann ohne einen Austausch des Distanzelements dessen Elementbreite und damit die Breite des Einfüllspalts eingestellt werden.

Bei beiden erfindungsgemäßen Gießformen ist vorzugsweise vorgesehen, dass der Gießformmantel zumindest an einer Gießformstirnseite auf einer den Gießraum gießformstirnseitig abschließenden Stirnfläche steht. Diese Ausgestaltung bietet den Vorteil, dass der Gießraum stirnseitig mit der gleichen Stirnfläche besonders leicht auch für verschiedene über den Gießformmantel eingestellte Außendurchmesser des Gießraums abgeschlossen werden kann.

Weiter bevorzugt ist der Gießraum an der abschließenden Stirnfläche mit einer Dichtung abgedichtet. Hierdurch ist vorteilhaft ein Austreten von Gießharz beim Befüllen der Gießform an der abschließenden Stirnfläche vermieden.

Bevorzugt umgreift die Dichtung den Gießformmantel. Dazu kann die Dichtung beispielsweise als U-Profil ausgebildet sein, dass stirnseitig über die Gießformmantelwand und die entsprechenden Wände des Gießformeinfüllstutzenteils übergestülpt sind, wobei dann der Gießformmantel über die Dichtung an der abschließenden Stirnfläche anliegt. Eine solche Dichtung ist als Massenware und daher sehr preisgünstig erhältlich.

Vorzugsweise ist jede Verbindung mit einer Dichtung abgedichtet. Dadurch ist es beim Gießen der Gießharzspule vermieden, dass Gießharz durch die Verbindung nach außen austritt und die Verbindung durch das Gießharz verklebt wird. Zur Abdichtung kann beispielsweise eine entsprechende Dichtmasse oder eine Gummidichtung oder ein entsprechender Dichtungsschaum vorgesehen sein.

Nach einer bevorzugten Ausgestaltung weist der Gießformmantel einen Überlappungswandteil auf, der die eine Verbindung innenseitig in Umfangsrichtung überlappt. Dadurch ist eine zusätzliche Abdichtung der Verbindung gegen das Gießharz erreicht, da nach dem Einsetzen der Gießharzspule in die Gießform der Überlappungswandteil von innen gegen die Verbindung gepresst wird, wodurch diese für das Gießharz schwer zugänglich ist.

Die Erfindung wird anhand der Zeichnung näher erläutert. Es zeigen:
- Figur 1: eine perspektivische Ansicht eines Gießformmantels,
- Figur 2: eine Draufsicht auf den Gießformmantel gemäß Figur 1,
- Figur 3: einen vergrößerten Ausschnitt auf die Draufsicht gemäß Figur 2
- Figur 4: eine Draufsicht auf eine modifizierte Gießform,
- Figur 5: eine perspektivische Ansicht eines Gießformverlängerungsteils,
- Figur 6: eine Draufsicht auf die Gießform gemäß Figur 4 mit eingesetztem Gießformverlängerungsteil gemäß Figur 5,
- Figur 7: eine Gießformmantelwand,
- Figur 8: eine und eine weitere Gießformmantelwand im Vergleich, und
- Figur 9: eine Schnittansicht gemäß Figur 2.

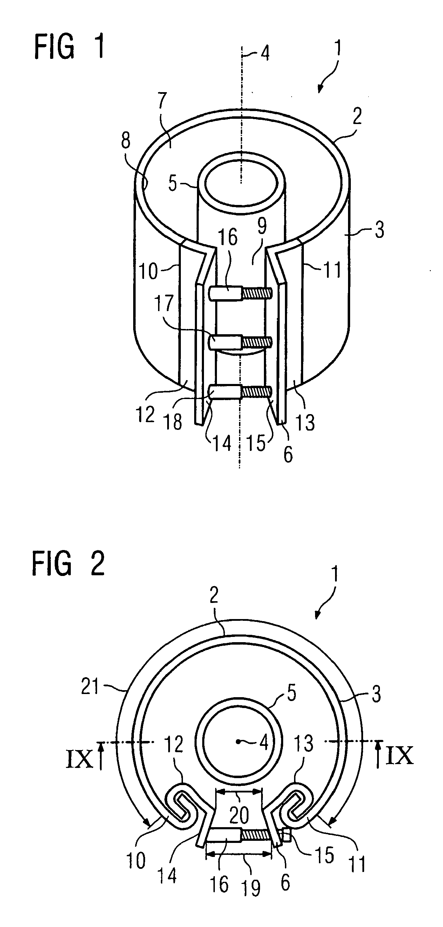

In Figur 1 ist eine sich entlang einer Achse 4 erstreckende Gießform 1 dargestellt, die einen äußeren Gießformmantel 2 gebildet mit einer rohrförmig gebogenen Gießformmantelwand 3 und einem Gießformeinfüllstutzenteil 6 aufweist. Der Gießformmantel 2 umgibt einen zylindrischen Gießraum 7, dessen Außenumfang mit der Innenseite 8 des Gießformmantels 2 zusammenfällt und dementsprechend durch den Gießformmantel 2 definiert ist. Die Gießform 1 weist weiterhin einen den Gießraum 7 nach innen begrenzenden weiteren Gießformmantel 5 auf.

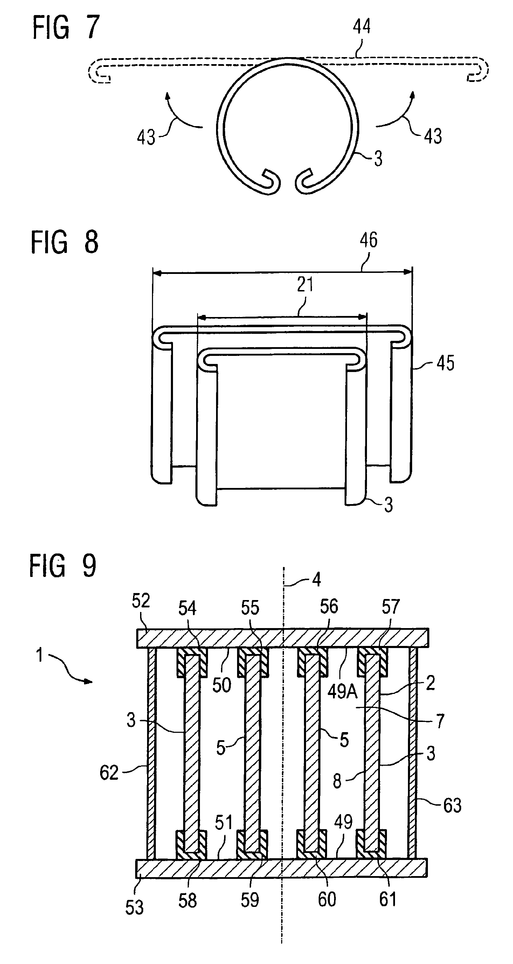

Der Gießformmantel 2 weist einen Einfüllspalt 9 auf, über den der Gießbereich 7 mit einem Gießharz befüllbar ist. Der Gießformmantel 2 weist vorliegend eine erste schematisch mit einem Strich angedeutete Verbindung 10 auf, über die der Gießformmantel 2 lösbar in axialer Richtung auftrennbar ist. Der Gießformmantel 2 weist eine zweite, ebenfalls schematisch mit einer Linie angedeutete lösbare Verbindung 11 auf, die ebenfalls dem axialen Auftrennen des Gießformmantels 2 dient. Die Ausführung der beiden lösbaren Verbindungen 10 und 11 ist in der Beschreibung zu den Figuren 2 und 7 näher erläutert.

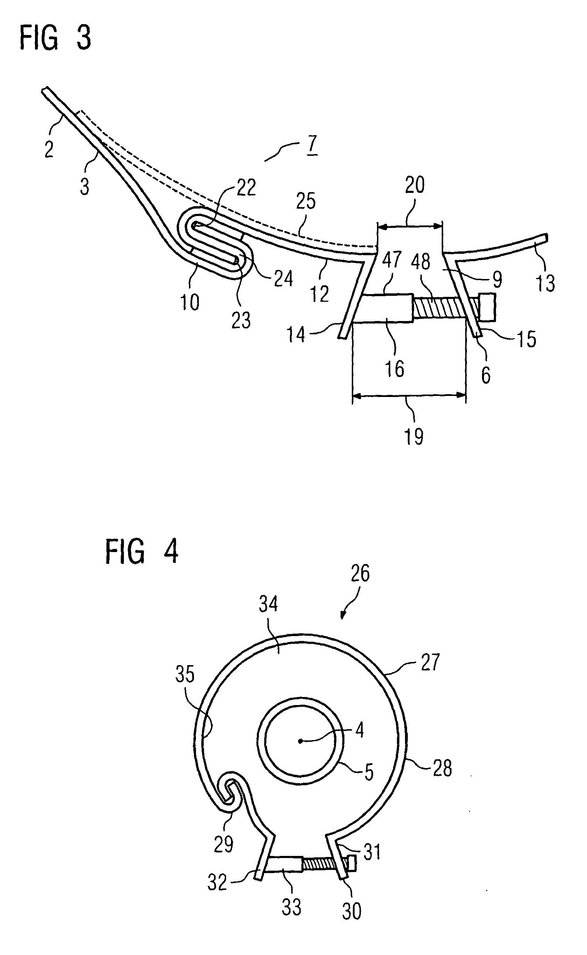

Der Gießformeinfüllstutzenteil 6 weist eine erste und eine zweite Teilmantelwand 12 bzw. 13 auf, über die er jeweils mit der Gießformmantelwand 3 an den lösbaren Verbindungen 10 und 11 verbunden ist. Der Gießformeinfüllstutzenteil 6 weist weiterhin zwei sich über die gesamte axiale Gießformlänge erstreckende und winklig nach außen ragende Einfüllstutzenwände 14 bzw. 15 auf, die mit den Teilmantelwänden 12 bzw. 13 verbunden sind. Die Einfüllstutzenwände 14 und 15 sind über den Einfüllspalt 9 voneinander beabstandet und über Distanzelemente 16, 17 und 18 verbunden. Die Distanzelemente 16 bis 18 weisen alle eine gleiche Elementbreite 19 auf (siehe Figur 2), über die die Breite 20 (siehe Figur 2) des Einfüllspalts festgelegt ist.
Die Distanzelemente 16 bis 18 können mit fester Elementbreite 19 ausgebildet sein. Vorliegend kann jedoch die Elementbreite 19 der Distanzelemente 16 bis 19 variiert werden, wie weiter unten erläutert wird (siehe Figur 3).

Über die lösbaren Verbindungen 10 und 11 kann der Gießformeinfüllstutzenteil 6 vollständig von der Gießformmantelwand 3 abgetrennt werden. Dadurch kann die eine Gießformmantelwand 3 durch eine baugleiche, sich aber in ihrer den Außenumfang des Gießraums 7 definierenden Kantenlänge 21 (siehe Figur 2) von der Gießformmantelwand 3 unterscheidenden weiteren Gießformmantelwand 45 (siehe Figur 8) ersetzt werden. Dadurch kann die Gießform 1 zur Änderung des Außendurchmessers des Gießraums 7 modifiziert werden, wobei lediglich eine Gießformmantelwand 3 durch eine andere Gießformmantelwand 45 ersetzt werden muss und das Gießformeinfüllstutzenteil 6 beibehalten werden kann.

In Figur 2 ist eine Draufsicht auf die Gießform 1 gemäß Figur 1 dargestellt. Deutlich zu erkennen ist die Ausführung der lösbaren Verbindungen 10 bzw. 11, über die der Gießformeinfüllstutzenteil 6 mit der Gießformmantelwand 3 lösbar verbunden ist. Die beiden Verbindungen 10 und 11 sind vorliegend als Hakverbindungen ausgeführt. Der Aufbau der Hakverbindungen 10 und 11 wird in Figur 3 näher erläutert, wobei dort die Verbindung 10 in einer vergrößerten Ansicht dargestellt ist.

Bei der in Figur 3 in einer vergrößerten Ansicht dargestellten lösbaren Verbindung 10 sind die Gießformmantelwand 3 und die Teilmantelwand 12 miteinander verhakbar ausgebildet. Dazu ist die Gießformmantelwand 3 im Bereich an ihrer in axialer Richtung gerichteten Kante 22 zurückgebogen. Ebenso ist die Teilmantelwand 12 im Bereich an ihrer in axialer Richtung gerichteten Teilmantelwandkante 23 korrespondierend zu der Kante 22 zurückgebogen, so dass die Teilmantelwand 12 und die Gießformmantelwand 3 an ihren Kanten 22 bzw. 23 ineinandergreifen. Um die lösbare Verbindung 10 gießharzdicht auszubilden, ist sie mit einer entsprechend eingelegten Dichtung 24 versehen, die beispielsweise als Gummiband ausgebildet sein kann und entsprechend dem Verlauf der Teilmantelwand 12 und der Gießformmantelwand 3 an der Teilmantelwandkante 23 bzw. Kante 22 entsprechend S-förmig gebogen ist.

Zur Abdeckung der lösbaren Verbindung 10 und um den Verlauf des Gießraums 7 an seinem Außenumfang zu vergleichmäßigen, sowie um die lösbare Verbindung 10 noch besser gießharzdicht auszuführen, kann der Gießformmantel 2 eine mit gestrichelten Linien angedeutete Überlappungswand 25 aufweisen, die die Verbindung 10 innenseitig in Umfangsrichtung überlappt. Vorliegend ist die Überlappungswand mit der Teilmantelwand 12 des Einfüllstutzenteils 6 verbunden, sie kann ebenso statt dessen mit der Gießformmantelwand 3 verbunden sein.

Die Breite 16 des Einfüllspalts 9 ist über die Elementbreiten der Distanzelemente, von denen in Figur 3 nur das Distanzelement 16 mit seiner Elementbreite 19 gezeigt ist, eingestellt. Zur Veränderung des Außenumfangs des Gießraums 7 kann die Elementbreite 19 des Distanzelements 16 verändert werden. Das Distanzelement 16 weist dazu eine mit der Einfüllstutzenwand 14 verbundene Hülsenmutter 47 auf, in die eine Schraube 48 eingeschraubt ist. Je weiter die Schraube 48 in die Hülsenmutter 47 eingeschraubt ist, um so kürzer ist die Elementbreite 19 des Distanzelements 16. Durch entsprechend weites Einschrauben der Schraube 48 in die Hülsenmutter 47 kann somit die Elementlänge 19 und damit die Breite 20 des Einfüllspalts 9 verändert werden.

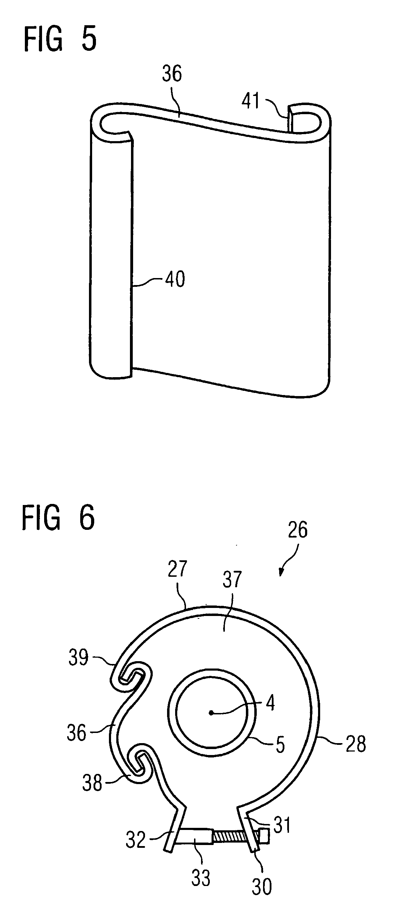

In Figur 4 ist eine zur Figur 2 korrespondierende Draufsicht auf eine gegenüber der Gießform 1 gemäß Figur 1 modifizierte Gießform 26 gezeigt. Die Gießform 26 weist einen mit einer Gießformmantelwand 27 gebildeten Gießformmantel 28 auf. Der Gießformmantel 28 umgibt einen zylindrischen Gießbereich 34, dessen Außenumfang mit der Innenseite 35 des Gießformmantels 28 zusammenfällt, insoweit ist auch hier der Außenumfang durch den Gießformmantel 28 definiert. Die Gießformmantelwand 28 ist an einer, der Verbindung 10 der Gießform 1 entsprechenden lösbaren Verbindung 29 in axialer Richtung auftrennbar. Der Gießformmantel 28 weist ein gegenüber dem Gießformeinfüllstutzenteil 6 modifiziertes Gießformeinfüllstutzenteil 30 auf, das nicht vollständig von der Gießformmantelwand 27 abtrennbar ist, weil keine weitere, der Verbindung 11 gemäß Gießform 1 entsprechende lösbare Verbindung vorgesehen ist. Der Gießformeinfüllstutzenteil 30 weist ebenfalls zwei Einfüllstutzenwände 31 und 32 auf, die den Einfüllstutzenwänden 14 und 15 des Einfüllstutzens 6 der Gießform 1 entsprechen. Die Einfüllstutzenwände 31 und 32 sind ebenso wie die Einfüllstutzenwände 14 und 15 der Gießform 1 über Distanzelemente verbunden, wobei vorliegend aufgrund der Ansicht nur ein Distanzelement 33 gezeigt ist. Um den Außenumfang des Gießraums 34 zu vergrößern, ist ein Gießformmantelverlängerungsteil 36 vorgesehen, das in einer perspektivischen Ansicht in Figur 5 dargestellt ist. Es kann in den Gießformmantel 28 nach dem Lösen der Verbindung 29 eingesetzt werden, so dass sich nach dessen Einsetzen wieder ein geschlossener Gießraum 37 (s. Figur 6) mit einem größeren Außenumfang ergibt.

In Figur 6 ist eine Draufsicht auf die Gießform 26 mit dem in den Gießformmantel 28 eingesetzten Gießformmantelverlängerungsteil 36 dargestellt. Durch das Einsetzen des Gießformmantelverlängerungsteils 36 ist der Außenumfang des Gießraums 37 im Vergleich zum Außenumfang des Gießraums 34 vergrößert. Das Gießraummantelverlängerungsteil 36 ist über die beim Einsetzen neu gebildeten Verbindungen 38 und 39 lösbar mit der Gießformmantelwand 27 verbunden. Die jeweilige Ausführung der Verbindungen 38 und 39 entspricht dabei der lösbaren Verbindung 10, so dass zu deren Erläuterung auf die entsprechende Erläuterung der lösbaren Verbindung 10 bei der Beschreibung zu den Figuren 2 und 3 verwiesen wird. Das Gießformmantelverlängerungsteil ist in den Bereichen seiner axial verlaufenden Kanten 40 und 41 (siehe Figur 5) entsprechend so umgebogen, dass es mit der Gießformmantelwand 27 beidseitig verhakbar ist.

Die Gießform 26 kann auch zusätzlich mit einer der lösbaren Verbindung 11 gemäß Figur 1 entsprechenden weiteren Verbindung ausgebildet sein, so dass auch das Einfüllstutzenteil 30 komplett von der Gießformmantelwand 27 abtrennbar ist. Dadurch können die Vorteile der Gießform 1 und der Gießform 26 erreicht werden, d. h. es kann zur Verlängerung des Gießformmantels 28 das Gießformmantelverlängerungsteil 36 verwendet werden und zusätzlich oder alternativ anstelle der Gießformmantelwand 27 eine andere Gießformmantelwand mit dem Einfüllstutzenteil 30 verbunden werden, um den Außenumfang entsprechend einzustellen.

Die Gießformmantelwand 27 bzw. das Gießformmantelverlängerungsteil 36 können ebenso zur innenseitigen Überlappung der Verbindungen 39 und 38 der Überlappungswand 25 entsprechende Überlappungswände aufweisen.

In Figur 7 ist die rohrförmig gebogene Gießformmantelwand 3 vereinzelt, d. h. ohne Verbindung mit dem Einfüllstutzenteil 6 gemäß der Figuren 1 und 2 dargestellt. Die Gießformmantelwand 3 ist aus einem derart federnden Material ausgebildet, dass es zum Einsetzen in den Gießformmantel 2 der Gießform 1 gegen eine Federkraft - mit Pfeilen 43 angedeutet - gebogen ist und ohne biegende Kräfte zu einer weitgehend flachen Platte zurückfedert, wie dies mit gestrichelten Linien 44 angedeutet ist. Dadurch ist die Gießformmantelwand 3 allein für sich besonders gut lagerbar, weil sie nicht in dem gebogenen Zustand verbleibt, sondern als weitgehend flache Platte vorliegt. Das Gießformmantelverlängerungsteil 36 kann ebenso wie die Gießformmantelwand 3 aus einem solchen federnden Material ausgebildet sein, so dass auch sie für sich allein und ohne Einwirkung von biegenden Kräften als weitgehend flache Platte vorliegt.

In Figur 8 ist die Gießformmantelwand 3 im Vergleich zu einer weiteren Gießformmantelwand 45 dargestellt. Die den Außenumfang des Gießraums 7 bestimmende Kantenlänge 21 ist kürzer als die entsprechende Kantenlänge 46 der Gießformmantelwand 45. Die Gießformmantelwand 45 ist ansonsten baugleich zur Gießformmantelwand 3 aufgebaut und daher anstelle der Gießformmantelwand 3 mit dem Einfüllstutzenteil 6 der Gießform 1 verbindbar, so dass sich eine nicht näher dargestellte Gießform mit einem im Außenumfang vergrößerten Gießraum 7 ergibt. Auch die Gießformmantelwand 45 kann entsprechend der Gießformmantelwand 3 aus federndem Material ausgeführt sein, so dass die ebenso bei Vereinzelung als weitgehend flache Platte vorliegt.

In Figur 9 ist der in Figur 2 eingezeichnete Schnitt IX dargestellt. Der Gießraum 7 ist an den Stirnseiten 49 und 49A der Gießform 1 jeweils mit einer Stirnfläche 50 bzw. 51 abgeschlossen. Die Stirnflächen 50 und 51 sind durch jeweils eine an den Stirnseiten 49 und 49A der Gießform 1 angeordnete flachen Platte 53 bzw. 52 gebildet. Der Gießformmantel steht jeweils stirnseitig auf den Stirnflächen 50 bzw. 51. Zum Anpressen der Platten 52 und 53 gegen die Gießformmantelwand 2 und den Gießformmantel 5 sind diese über Zugstangen 62 und 63 gegeneinander verspannt, die der besseren Übersichtlichkeit halber in den Figuren 1 und 2 nicht dargestellt wird.

Zum Abdichten des Gießraums 7 sind an jeder der abschließenden Stirnflächen 50 und 51 Dichtungen 54 bis 57 bzw. 58 bis 61 vorgesehen, die beispielsweise aus Perbunan ausgebildet sein können. Die Dichtungen 54, 57, 58 und 61 umgreifen dabei jeweils den Gießformmantel 2 und sind dazu jeweils mit U-förmigem Profil ausgebildet. Solche Gießharzdichtungen 54 bis 61 mit U-förmigem Profil sind in der Regel als Meterware erhältlich und dadurch preiswert; darüber hinaus sind sie besonders leicht an der Gießformmantelwand 2 bzw. dem Gießformmantel 5 anbringbar. Durch diese Ausführung der Dichtungen 54, 58, 57 und 61 ist der Gießformmantel 2 über die Dichtungen 54, 57, 58 und 61 mit den abschließenden Stirnflächen 50 bzw. 51 verbunden.

## Patentansprüche

1. Gießform (1,26) für zylindrische Gießharzspulen, die sich entlang einer Achse (4) erstreckt, mit einem äußeren mit einer rohrförmig gebogenen Gießformmantelwand (3,27) ausgebildeten Gießformmantel (2,28), der einen zylindrischen Gießraum (7,37) umgibt und mit einem Einfüllspalt (9) über den der Gießraum (7,37) mit Gießharz befüllbar ist, wobei der Gießformmantel (2,28) mit einer lösbaren Verbindung (10,29) in axialer Richtung auftrennbar ist,
**dadurch gekennzeichnet, dass**
ein Gießformmantelverlängerungsteil (36) vorgesehen ist, das derart ausgebildet ist, dass es an der aufgetrennten Verbindung (10) zur Verlängerung des Gießformmantels (2,28) in den Gießformmantel (2,28) einsetzbar ist.

2. Gießform nach Anspruch 1,
**dadurch gekennzeichnet, dass**
die Verbindung (10,29) eine Hakverbindung ist.

3. Gießform nach Anspruch 2,
**dadurch gekennzeichnet, dass**
die Gießformmantelwand (27) an ihren die Verbindung (10) bildenden, in axialer Richtung gerichteten Kanten jeweils derart korrespondierend zurückgebogen ist, so dass die Kanten miteinander verhakbar sind.

4. Gießform nach einem der vorhergehenden Ansprüche,
**dadurch gekennzeichnet, dass**
das Gießformmantelverlängerungsteil (36) dünnwandig und aus einem derart federnden Material ausgebildet ist, dass es zum Einsetzen in den Gießformmantel (2,28) gegen eine Federkraft (43) gebogen ist, die bei Vereinzelung des Gießformmantelverlängerungsteils (36) dessen Zurückfedern zu einer weitgehend flachen Platte bewirkt.

5. Gießform nach einem der vorhergehenden Ansprüche,
**dadurch gekennzeichnet, dass**
der Gießformmantel (2,28) ein sich über die gesamte axiale Gießformlänge erstreckendes Gießformeinfüllstutzenteil (6,30) mit dem Einfüllspalt (9) aufweist, wobei das Gießformeinfüllstutzenteil (6,30) über die eine lösbare Verbindung (10,29) und eine weitere lösbare Verbindung (11) vollständig von der Gießformmantelwand (3,27) abtrennbar ist.

6. Gießform für zylindrische Gießharzspulen, die sich entlang einer Achse (4) erstreckt, mit einem äußeren Gießformmantel (2), der einen zylindrischen Gießbereich (7) umgibt und durch den der Außenumfang des Gießraums (7) weitgehend definiert ist, wobei der Gießformmantel (2) eine rohrförmig gebogene Gießformmantelwand (3) und einen mit der Gießformmantelwand (3) verbundenen, sich über die gesamte axiale Länge des Gießformmantels (2) erstreckenden Gießharzeinfüllstutzenteil (6) aufweist, über das der Gießraum (7) mit Gießharz befüllbar ist, wobei der Gießformmantel (2) mit einer lösbaren Verbindung (10) in axialer Richtung auftrennbar ist,
**dadurch gekennzeichnet, dass**
der Gießformmantel (2) eine weitere lösbare Verbindung (11) aufweist, mit der der Gießformmantel (2) in axialer Richtung auftrennbar ist und die Verbindungen (10,11) derart angeordnet sind, dass der Gießharzeinfüllstutzenteil (6) von der Gießformmantelwand (3) abtrennbar ist, wobei die Verbindungen (10,11) als Hakverbindung ausgebildet sind.

7. Gießform nach Anspruch 6,
**dadurch gekennzeichnet, dass**
das Gießharzeinfüllstutzenteil (6) zumindest eine Teilmantelwand (12) aufweist, die mit der Gießformmantelwand (3) zur Bildung der zumindest einen Verbindung (10) verhakbar ist, wobei die Gießformmantelwand (3) im Bereich an ihrer in axialer Richtung gerichteten, die zumindest eine Verbindung (10) bildenden Kante (22) zurückgebogen ist und die Teilmantelwand (12) im Bereich an ihrer in axialer Richtung gerichteten, die Verbindung (10) bildenden Teilmantelwandkante (23) entsprechend korrespondierend zu der die Verbindung (10) bildenden Kante (22) der Gießformmantelwand (3) zurückgebogen ist.

8. Gießform nach einem der Ansprüche 6 bis 7,
**dadurch gekennzeichnet, dass**
eine weitere Gießformmantelwand (45) mit einer gegenüber der einen Gießformmantelwand (3) unterschiedlichen, den Außenumfang des Gießraums (7) definierenden Kantenlänge zum Austausch gegen die eine Gießformmantelwand (3) vorgesehen ist.

9. Gießform nach einem der Ansprüche 6 bis 8,
**dadurch gekennzeichnet, dass**
die Gießformmantelwand (3) aus einem derart federnden Material gebildet ist, dass die Gießformmantelwand (3) zur Verbindung mit dem Gießharzeinfüllstutzenteil (6) gegen eine Federkraft gebogen ist, die bei Vereinzelung der Gießformmantelwand (3) deren Zurückfedern zu einer weitgehend flachen Platte bewirkt.

10. Gießform nach einem der Ansprüche 5 bis 8,
**dadurch gekennzeichnet, dass**
das Gießformeinfüllstutzenteil (6) derart ausgebildet ist, dass die Breite (20) des Einfüllspalts (9) einstellbar ist.

11. Gießform nach Anspruch 10,
**dadurch gekennzeichnet, dass**
das Gießharzeinfüllstutzenteil (6) zwei sich über die gesamte axiale Gießformlänge erstreckende, winklig nach außen ragende Einfüllstützenwände (14,15) aufweist, die über den Einfüllspalt (9) voneinander beabstandet sind und die über zumindest ein Distanzelement (16,17,18) verbunden sind, durch dessen Elementbreite (19) die Breite (20) des Einfüllspalts (9) festgelegt ist.

12. Gießform nach Anspruch 11,
**dadurch gekennzeichnet, dass**
die Elementbreite (19) des Distanzelements (16,17,18) einstellbar ist.

13. Gießform nach einem der vorhergehenden Ansprüche,
**dadurch gekennzeichnet, dass**
der Gießformmantel (5) zumindest an einer Gießformstirnseite (49,49A) auf einer den Gießraum stirnseitig abschließenden Stirnfläche (50,51) steht.

14. Gießform nach Anspruch 13,
**dadurch gekennzeichnet, dass**
der Gießraum (7) an der abschließenden Stirnfläche (50,51) mit einer Gießharzdichtung (54,55,56,57,58,59,60,61) abgedichtet ist.

15. Gießform nach Anspruch 14,
**dadurch gekennzeichnet, dass**
die Gießharzdichtung (54,55,56,57,58,59,60,61) den Gießformmantel (2) umgreift.

16. Gießform nach einem der Ansprüche 6 bis 15,
**dadurch gekennzeichnet, dass**
jede Verbindung (10,11) mit einer Gießharzdichtung (24) abgedichtet ist.

17. Gießform nach einem der vorhergehenden Ansprüche,
**dadurch gekennzeichnet, dass**
der Gießformmantel (2) einen Überlappungswandteil (25) aufweist, der die eine Verbindung (10) innenseitig in Umfangsrichtung überlappt.

## Claims

1. Casting mold (1, 26) for cylindrical cast-resin coils, which extends along an axis (4), with an outer casting-mold casing (2, 28) which is designed with a tubularly bent casting-mold casing wall (3, 27) and which surrounds a cylindrical casting space (7, 37), and with a filling gap (9), via which the casting space (7, 37) can be filled with casting resin, the casting-mold casing (2, 28) being severable in the axial direction by means of a releasable connection (10, 29), **characterized in that** a casting-mold casing lengthening part (36) is provided, which is designed in such a way that it can be inserted into the casting-mold casing (2, 28) at the severed connection (10) in order to lengthen the casting-mold casing (2, 28).

2. Casting mold according to claim 1, **characterized in that** the connection (10, 29) is a hook connection.

3. Casting mold according to claim 2, **characterized in that** the casting-mold casing wall (27) is correspondingly bent back, at its axial directed edges forming the connection (10), in each case in such a way that the edges can be hooked together with one another.

4. Casting mold according to one of the preceding claims, **characterized in that** the casting-mold casing lengthening part (36) is produced so as to be thin-walled and formed from such a resilient material that, for insertion into the casting-mold casing (2, 28), it is bent counter to a spring force (43) which, when the casting-mold casing lengthening part (36) is separated, causes the latter to spring back into a largely flat plate.

5. Casting mold according to one of the preceding claims, **characterized in that** the casting-mold casing (2, 28) has a casting-mold filling connection part (6, 30) extending over the entire axial casting-mold length and having the filling gap (9), the casting-mold filling connection part (6, 30) being separable completely from the casting-mold casing wall (3, 27) via the one releasable connection (10, 29) and a further releasable connection (11).

6. Casting mold for cylindrical cast-resin coils, which extends along an axis (4), with an outer casting-mold casing (2) which surrounds a cylindrical casting region (7) and by which the outer circumference of the casting space (7) is largely defined, the casting-mold casing (2) having a tubularly bent casting-mold casing wall (3) and a casting-resin filling connection part (6) which is connected to the casting-mold casing wall (3) and extends over the entire axial length of the casting-mold casing (2) and via which the casting space (7) can be filled with casting resin, the casting-mold casing (2) being severable in the axial direction by means of a releasable connection (10), **characterized in that** the casting-mold casing (2) has a further releasable connection (11), by means of which the casting-mold casing (2) is severable in the axial direction, and the connections (10, 11) are arranged in such a way that the casting-resin filling connection part (6) can be separated from the casting-mold casing wall (3), the connections (10, 11) being designed as a hook connection.

7. Casting mold according to claim 6, **characterized in that** the casting-resin filling connection part (6) has at least one part-casing wall (12) which can be hooked together with the casting-mold casing wall (3) to form the at least one connection (10), the casting-mold casing wall (3) being bent back in the region of its axially directed edge (22) forming the at least one connection (10), and the part-casing wall (12) being bent back in the region of its axially directed part-casing wall edge (23) forming the connection (10), correspondingly to that edge (22) of the casting-mold casing wall (3) which forms the connection (10).

8. Casting mold according to either one of claims 6 and 7, **characterized in that** a further casting-mold casing wall (45), with an edge length different from that of the one casting-mold casing wall (3) and defining the outer circumference of the casting space (7), is provided for the purpose of exchange for the one casting-mold casing wall (3).

9. Casting mold according to one of claims 6 to 8, **characterized in that** the casting-mold casing wall (3) is formed from such a resilient material that, for the connection to the casting-resin filling connection part (6), the casting-mold casing wall (3) is bent counter to the spring force which, when the casting-mold casing wall (3) is separated, causes the latter to spring back into a largely flat plate.

10. Casting mold according to one of claims 5 to 8, **characterized in that** the casting-mold filling connection part (6) is designed in such a way that the width (20) of the filling gap (9) is adjustable.

11. Casting mold according to claim 10, **characterized in that** the casting-resin filling connection part (6) has two filling connection walls (14, 15) which extend over the entire axial casting-mold length and project angularly outwards and which are spaced apart from one another via the filling gap (9) and are connected via at least one spacer element (16, 17, 18), by the element width (19) of which the width (20) of the filling gap (9) is fixed.

12. Casting mold according to claim 11, **characterized in that** the element width (19) of the spacer element (16, 17, 18) is adjustable.

13. Casting mold according to one of the preceding claims, **characterized in that** the casting-mold casing (5) stands, at least on one casting-mold fore-side (49, 49A), on an end face (50, 51) closing off the casting space on the fore-side.

14. Casting mold according to claim 13, **characterized in that** the casting space (7) is sealed off at the closing-off end face (50, 51) by means of a cast-resin seal (54, 55, 56, 57, 58, 59, 60, 61).

15. Casting mold according to claim 14, **characterized in that** the cast-resin seal (54, 55, 56, 57, 58, 59, 60, 61) surrounds the casting-mold casing (2).

16. Casting mold according to one of claims 6 to 15, **characterized in that** each connection (10, 11) is sealed off by means of a cast-resin seal (24).

17. Casting mold according to one of the preceding claims, **characterized in that** the casting-mold casing (2) has an overlapping wall part (25) which overlaps the one connection (10) on the inside in the circumferential direction.

## Revendications

1. Moule ( 1, 26 ) de coulée pour de bobines cylindriques en résine de coulée, qui s'étend le long d'un axe ( 4 ) en ayant une surface ( 2, 28 ) latérale de moule de coulée extérieure, qui est constituée d'une paroi ( 3, 27 ) de surface latérale de moule de coulée courbée tubulairement et qui entoure une empreinte ( 7, 27 ) cylindrique, et comprenant une fente ( 9 ) d'introduction par laquelle l'empreinte ( 7 ), 37 ) peut être emplie de résine de coulée, la surface ( 2, 28 ) latérale du moule de coulée pouvant être séparée en direction axiale par une liaison ( 10, 29 ) amovible,
**caractérisé en ce que**
il est prévu une partie ( 36 ) de prolongement de la surface latérale du moule de coulée, qui est telle qu'elle peut être mise dans la surface ( 2, 28 ) latérale de moule de coulée sur la liaison ( 10 ) séparée pour prolonger la surface ( 2, 28 ) latérale du moule de coulée.

2. Moule de coulée suivant la revendication 1,
**caractérisé en ce que**
la liaison ( 10, 29 ) est une liaison par accrochage.

3. Moule de coulée suivant la revendication 2,
**caractérisé en ce que**
la paroi ( 27 ) de la surface latérale du moule de coulée est, sur son bord dirigé en direction axiale et formant la liaison ( 10 ), respectivement en retrait de manière correspondante, de sorte que les bords peuvent être accrochés l'un à l'autre.

4. Moule de coulée suivant l'une des revendications précédentes,
**caractérisé en ce que**
la partie ( 36 ) de prolongement de la surface latérale du moule de coulée est à paroi mince, de sorte qu'elle est, pour l'insertion dans la surface latérale ( 2, 28 ) du moule de coulée, courbée à l'encontre d'une force ( 43 ) élastique qui provoque, lors de la séparation de la partie ( 36 ) de prolongement de la surface latérale du moule de coulée, son retour élastique en une plaque sensiblement plane.

5. Moule de coulée suivant l'une des revendications précédentes,
**caractérisé en ce que**
la surface ( 2, 28 ) latérale du moule de coulée a une partie ( 6, 30 ) de tubulure de remplissage du moule de coulée s'étendant sur toute la longueur axiale du moule de coulée ayant la fente ( 9 ) de remplissage, la partie ( 6, 30 ) de tubulure de remplissage du moule de coulée pouvant être séparée complètement de la paroi ( 3, 27 ) de surface latérale du moule de coulée par la liaison ( 10, 29 ) amovible et par une autre liaison ( 11 ) amovible.

6. Moule de coulée pour des bobines cylindriques de résine de coulée, qui s'étend le long d'un axe ( 4 ), comprenant une surface ( 2 ) latérale extérieure de moule de coulée, qui entoure une zone ( 7 ) cylindrique de coulée et par laquelle le pourtour extérieur de l'empreinte ( 7 ) est défini dans une grande mesure, dans lequel la surface latérale du moule de coulée a une paroi ( 3 ) de surface latérale du moule de coulée courbée de façon tubulaire et une partie ( 6 ) de tubulure de remplissage par de la résine de coulée reliée à la paroi ( 3 ) de la surface latérale du moule de coulée et s'étendant sur toute la longueur axiale de la surface ( 2 ) latérale du moule de coulée, partie par laquelle l'empreinte ( 7 ) peut être remplie de résine de coulée, la surface ( 2 ) latérale du moule de coulée pouvant être séparée en direction axiale par une liaison ( 10 ) amovible,
**caractérisé en ce que**
la surface ( 2 ) latérale du moule de coulée a une autre liaison ( 11 ) amovible par laquelle la surface ( 2 ) latérale du moule de coulée peut être séparée dans la direction axiale et les liaisons ( 10, 11 ) sont disposées de façon à ce que la partie ( 6 ) de tubulure de remplissage par de la résine de coulée puisse être séparée de la paroi ( 3 ) de la surface latérale du moule de coulée, les liaisons ( 10, 11 ) étant constituées sous la forme de liaisons par crochetage.

7. Moule de coulée suivant la revendication 6,
**caractérisé en ce que**
la partie ( 6 ) de tubulure de remplissage par de la résine de coulée a au moins une paroi ( 12 ) partielle de surface latérale qui peut être accrochée à la paroi ( 3 ) de surface latérale du moule de coulée pour former la au moins une liaison ( 10 ), la paroi ( 3 ) de surface latérale du moule de coulée étant en retrait dans la région de son bord ( 22 ) dirigé dans la direction axiale et formant au moins une liaison ( 10 ) et la paroi ( 12 ) de surface latérale partielle étant, dans la région de son bord ( 23 ) de paroi de surface latérale partielle, dirigée dans la direction axiale et formant la liaison ( 10 ), en retrait de manière correspondante au bord ( 22 ) de la paroi ( 3 ) de la surface latérale du moule de coulée formant la liaison ( 10 ).

8. Moule de coulée suivant l'une des revendications 6 à 7,
**caractérisé en ce que**
il est prévu une autre paroi ( 45 ) de surface latérale de moule de coulée, ayant une longueur de bord différente par rapport à celui de la paroi ( 3 ) de surface latérale du moule de coulée et définissant le pourtour extérieur de l'empreinte ( 7 ), en vue d'être remplacée par la paroi ( 3 ) de surface latérale de moule de coulée.

9. Moule de coulée suivant l'une des revendications 6 à 8,
**caractérisé en ce que**
la paroi ( 3 ) de la surface latérale du moule de coulée est en un matériau élastique, de sorte que la paroi ( 3 ) de la surface latérale du moule de coulée est, pour la liaison à la partie ( 6 ) de tubulure de remplissage par de la résine de coulée, courbée à l'encontre d'une force élastique qui provoque, lors de la séparation de la paroi ( 3 ) de la surface latérale du moule de coulée, son retour élastique en une plaque dans une grande mesure plane.

10. Moule de coulée suivant l'une des revendications 5 à 8,
**caractérisé en ce que**
la partie ( 6 ) de tubulure de remplissage du moule de coulée est telle que la largeur ( 20 ) de la fente ( 9 ) de remplissage est réglable.

11. Moule de coulée suivant la revendication 10,
**caractérisé en ce que**
la partie ( 6 ) de tubulure de remplissage par de la résine de coulée a deux parois ( 14, 15 ) de tubulure de remplissage s'étendant sur toute la longueur axiale du moule de coulée et faisant saillie vers l'extérieur suivant un angle, qui sont mises à distance l'une de l'autre par la fente ( 9 ) de remplissage et qui sont reliées par au moins un élément ( 16, 17, 18 ) d'entretoisement par lequel la largeur ( 19 ) de l'élément fixe la largeur ( 20 ) de la fente ( 9 ) de remplissage.

12. Moule de coulée suivant la revendication 11,
**caractérisé en ce que**
la largeur ( 19 ) de l'élément ( 16, 17, 18 ) d'entretoisement est réglable.

13. Moule de coulée suivant l'une des revendications précédentes,
**caractérisé en ce que**
la surface ( 5 ) latérale du moule de coulée, au moins sur un côté ( 49, 49A ) frontal du moule de coulée, repose sur une surface ( 50, 51 ) frontale terminant l'empreinte du côté frontal.

14. Moule de coulée suivant la revendication 13,
**caractérisé en ce que**
l'empreinte ( 7 ) est rendue étanche sur la surface ( 50, 51 ) frontale de fermeture par une étanchéité ( 54, 55, 56, 57, 58, 59, 60, 61 ) à la résine de coulée.

15. Moule de coulée suivant la revendication 14,
**caractérisé en ce que**
l'étanchéité 54, 55, 56, 57, 58, 59, 60, 61 ) à la résine de coulée entoure la surface ( 2 ) latérale du moule de coulée.

16. Moule de coulée suivant l'une des revendications 6 à 15,
**caractérisé en ce que**
chaque liaison ( 10, 11 ) est rendue étanche par une garniture ( 24 ) d'étanchéité à la résine de coulée.

17. Moule de coulée suivant l'une des revendications précédentes,
**caractérisé en ce que**
la surface ( 2 ) latérale du moule de coulée a une partie ( 25 ) de paroi à chevauchement qui chevauche la liaison ( 10 ) du côté intérieur dans la direction périphérique.
